# EUROPÄISCHE PATENTSCHRIFT

(11) **EP 1 967 086 B1**
(45) Veröffentlichungstag und Bekanntmachung des Hinweises auf die Patenterteilung: **20.10.2010**
(21) Anmeldenummer: 07004486.2
(22) Anmeldetag: 05.03.2007
(51) Int. Cl.: A43B 13/12, A43B 17/14, B29D 35/14

(54) **Schaumkunststoff-Schuheinlegesohle**
Foam plastic shoe insole
Semelle en caoutchouc

(43) Veröffentlichungstag der Anmeldung: 10.09.2008
(60) Teilanmeldung: 10172198.3
(73) Patentinhaber: Spannrit Schuhkomponenten GmbH, 63801 Kleinostheim (DE)
(72) Erfinder: Katzer, Roland, 63801 Kleinostheim (DE)
(74) Vertreter: Leske, Thomas

(56) Entgegenhaltungen:
- EP-A- 1 602 294
- EP-A- 1 654 946
- GB-A- 2 039 716
- US-A1- 2005 138 847

## Beschreibung

Die Erfindung betrifft eine Schaumkunststoff-Schuheinlegesohle mit einem Kernteil und einem insbesondere durch Fräsen oder Schleifen erzeugten Fußbett.

In vielen Fällen werden Einlegesohlen mit stoßdämpfenden Eigenschaften verlangt, welche den Fuß und die Gelenke beim Gehen und Laufen schonen und so ausgebildet sind, dass die biomechanischen und physikalischen Gesetzmäßigkeiten beim Gehen oder Laufen unterstützt werden. Üblicherweise besteht ein fertiges gepolstertes Fußbett aus einem harten Grundkörper, der sohlenseitig angeordnet ist und dem fußseitig ein geeignet geformter Polsterkörper aus einem weicheren und elastischeren Material im Vergleich zum Grundkörper aufgesetzt oder angeschäumt ist. Hierbei werden vielfach mit Schaumkunststoff geschäumte Sohlen eingesetzt, die insbesondere mit PU- oder EVA-Schaum hergestellt werden. Hierzu werden zunächst PU-Schaum-Rohlinge hergestellt, deren Fußbett auf einer dem Fuß zugewandten Oberseite durch Fräsen, Schleifen oder ähnlichem in dem PU-Schaum erstellt wird. Die dem Fuß abgewandte Unterseite der fertigen Einlegesohlen muss dabei an den Schuh in den die Einlage eingelegt werden soll, angepasst sein.

Aus EP 1 602 294 ist eine Polyurethan-Schaum-Einlegesohle bekannt, die ein hartes Kernteil aufweist, welches aus thermoplastischem Urethan ausgebildet ist. Dabei wird das Kernteil zunächst allseitig mit Poiyurethan-Schaumstoff umschäumt. Hierzu wird das Kernteil in einer Ausschäumwanne fixiert und darin allseitig mit PU-Schaum umschäumt bzw. ummantelt. Damit das harte Kernteil mit dem Polyurethan-Schaum eine dauerhafte Verbindung ausbildet, wird das Kernteil bevorzugt aus thermoplastischem Urethan hergestellt, welches mit dem PU-Schaum eine nicht lösbare Verbindung eingeht. Zur weiteren Verstärkung der Verbindung zwischen Kernteil und Polyurethan-Schaum sind in dem Kernteil Durchbrüche vorgesehen, durch die der PU-Schaum hindurchtreten kann und Verbindungsstege von der Unterseite des Kernteils zu der Oberseite des Kernteils, welche dem Fuß zugewandt ist, ausbilden kann.

In dem so erzeugten PU-Schaum-Rohling wird in einem nächsten Schritt durch Abtragen von PU-Schaummaterial, beispielsweise durch Fräsen oder Schleifen, auf seiner Oberseite ein Fußbett eingebracht.

Nachteilig an der oben genannten Einlegesohle gemäß EP 1 602 294 A1 ist, dass beim Umschäumen des Kernteils nicht nur dessen fußseitige Oberseite, sondern auch dessen schuhsohlenseitige Unterseite mit Polyurethan-Schaum umschäumt wird. Da die Unterseite des PU-Schaum-Rohlings meist entsprechend der Ausschäumform eben ist, muss die Einlegesohle dem Schuh, in den sie eingelegt werden soll, angepasst werden. Dies erfolgt üblicherweise durch manuelles Schleifen der Unterseite des Schaumkunststoffrohlings. Dies ist nicht nur aufwändig, sondern erfordert auch viel Übung und Kenntnis von der den Prozessschritt ausführenden Person.

Um diese zeitraubende Anpassarbeit zu verkürzen, gibt es bereits Lösungsansätze, welche die Rohlinge (Fräsblöcke) durch geeignete geformte Ausschäumformen von unten annähernd in die an einen Schuh angepasste Form bringen und für welche somit außer dem Fußbett nur noch geringe Anpassungsarbeiten an der Unterseite notwendig sind. Dies hat aber den Nachteil, dass man für jede Größe und Form der Einlegesohle bzw. des Schuhs, in welche die Einlegesohle aufgenommen werden soll, eine passende Aufnahme benötigt. Der Aufwand des Wechselns der Formen ist dabei ähnlich groß wie der manuelle Aufwand des Schleifens der Unterseiten der Rohlinge, die in herkömmlichen ebenen Formen gegossen wurden.

Aufgabe der Erfindung ist es daher, eine Einlegesohle bereitzustellen, welche die Nachteile des Standes der Technik vermeidet, und ein Verfahren zur Verfügung stellt, das es ermöglicht, eine derartige Einlegesohle mit geringerem Aufwand als im Stand der Technik herzustellen.

Die Aufgabe wird durch eine Schaumkunststoff-Schuheinlegesohle mit den Merkmalen gemäß Anspruch 1 gelöst, deren Herstellung durch ein Verfahren mit den Merkmalen gemäß Anspruch 9 verwirklicht wird.

Vorteilhafte Weiterentwicklungen der erfindungsgemäßen Einlegesohle bzw. des erfindungsgemäßen Verfahrens sind in den jeweiligen abhängigen Ansprüchen definiert gerichtet.

Die erfindungsgemäße Schaumkunststoff-Einlegesohle umfasst ein Kernteil, das als Formteil ausgebildet und zumindest teilweise mit Schaumkunststoff ummantelt ist. Dabei weist das Kernteil eine dem Fuß zugewandte Innenfläche und eine dem Fuß abgewandte Außenfläche auf. Zumindest Teilbereiche der Innenfläche sind so ausgebildet, dass sie mit dem Schaumkunststoff eine dauerhafte Verbindung eingehen, und die Außenfläche ist so ausgebildet, dass ein daran angelagerter Schaumkunststoff vorzugsweise manuell leicht ablösbar ist, d. h. dass dort angelagerter Schaumkunststoff ohne maschinelle Hilfe von der Außenseite abgelöst werden kann.

Vorzugsweiseweise ist das Kernteil durch Spritzgießen hergestellt, das weiter bevorzugt bereits in Größe und Form dem Schuh, in den die Einlegesohle eingesetzt werden soll, angepasst ist. Das Kernteil der Einlegesohle, welches im Vergleich zum eingesetzten Schaumkunststoff hart ist, kann beispielsweise aus einer Polyethylen-Korkmischung bestehen. Andere Materialien wie z. B. Polypropylen, Ethylenvinylacetat oder thermoelastische oder thermoplastische Kunststoffe aller Art sind ebenso verwendbar, wie Kautschukwerkstoffe oder sonstige Materialien, die geeignet sind, das Kernteil als Formteil auszubilden. Dabei ist die Herstellung des Kernteils nicht auf das Spritzgussverfahren beschränkt.

Im Gegensatz zum oben genannten Stand der Technik muss bei der Materialpaarung das Material für das Kernteil und das Material für den angeschäumten Polsterkörper jedoch so gewählt werden, dass sich die beiden Materialien beim Anschäumen des Polsterkörpers an das Kernteil nicht dauerhaft verbinden.

Das vorgefertigte Formteil bzw. Kernteil ist in der späteren fertigen Einlegesohle auf der Unterseite, d. h. der der Schuhsohle zugewandten Seite bzw. der der Fußsohle abgewandten Seite angeordnet. Das Kernteil erstreckt sich bevorzugt vom Mittelfußbereich bis zum Fersenbereich. Bei geeigneter Ausgestaltung des Kernteils kann sich dieses aber auch über die gesamte Länge der Fußsohle erstrecken. Das Kernteil lässt sich in geeigneter Weise derart formen, um etwa als Stütze, beispielsweise für Spreizfüße, zu dienen und stabilisiert andererseits den weichen und flexiblen Schaumkunststoff. Das Kernteil, welches nach individuellen Anforderungen an die Einlegesohle erstellt werden kann, wird in einem nächsten Schritt mit Schaumkunststoff umschäumt und bildet in diesem Stadium den sogenannten Rohling, welcher auch als Fräsblock bezeichnet wird.

Das Fußbett wird im folgenden Schritt auf der dem Fuß zugewandten Oberseite der Einlegesohle erzeugt. Dies erfolgt beispielsweise durch Abfräsen der überschüssigen Schaumkunststoffmasse. Es sind aber auch andere materialabnehmende Verfahren möglich. Dabei sollte jedoch ein Verfahren gewählt werden, welches die Fußbettform der späteren Einlegesohle den Vorgaben entsprechend herausarbeiten kann. Durch die bevorzugt gewählte Materialpaarung muss die Unterseite, d. h. die Seite der Einlegesohle, welche der Fußsohle abgewandt ist, nicht maschinell bearbeitet werden, da hier das Schaumkunststoffmaterial von dem Kernteil manuell leicht abgelöst werden kann. Das beim Aufschäumen der Einlegesohle an deren Unterseite bzw. an der Außenseite des Kernteils angelagerte und dort für die Einlegesohle überflüssige Schaumkunststoffmaterial kann dabei ohne Hilfsmittel etwa in der Art eines Tesafilms von der Außenseite des Kernteiles abgezogen werden.

Das allenfalls geringe Anhaften des Schaumkunststoffs an der Außenseite des Kernteils soll dabei nur so stark sein, dass Schaumkunststoff, welcher sich an der Außenseite des Kernteils anlagert, beispielsweise per Hand abgezogen werden kann. Unter leichtem Ablösen soll auch ein Abschaben des Schaumkunststoffs mit einer biegesteifen Vorrichtung wie etwa mit einem Messer oder einer Spachtel verstanden werden.

Damit sich das Schaumkunststoffmaterial nicht auch von der Oberseite des Kernteils, also der fußzugewandten Seite des Kernteils ablöst, wird auf dieser Seite bei der Herstellung des Kernteils bzw. des Formteils beispielsweise ein Vlies zumindest auf Teilbereiche der Innenseite des Kernteils aufgebracht. Vorzugsweise, wenn das Kernteil im Spritzgussprozess hergestellt wird, wird das Vlies in das Spritzgusswerkzeug vor dem Spritzvorgang eingelegt. Die Oberseite, welche gleichzeitig auch als Innenseite des Kernteils bezeichnet wird, kann aber auch durch andere Materialien derart vorbereitet werden, dass bei einem An- oder Aufschäumen das Schaumkunststoffmaterial beispielsweise in Hinterschneidungen eingreifen kann, welche auf der Innenfläche des Kernteils ausgebildet sind, und so eine dauerhafte Verbindung zwischen der Innenseite des Kernteils und dem Schaumkunststoffmaterial entsteht. Dies kann bevorzugt durch Aufbringen eines Vlieses erfolgen, aber auch eine geeignete Oberflächenrauheit des Kernteils kann dafür ausreichend sein.

Es ist ebenfalls denkbar, dass die Innenseite des Kernteils mit einer zusätzlichen Schicht versehen wird, welche sowohl mit dem Material des Kernteils als auch mit dem verwendeten Schaumkunststoff eine dauerhafte Verbindung eingeht. Hierbei können Folien, welche im Spritzgussherstellungsprozess des Einlegeteils eingesetzt werden, als auch Kleber oder Klebefolien zum Einsatz kommen. Zur Verwirklichung des Erfindungsgedankens ist hierbei nur wichtig, dass das Schaumkunststoffmaterial an der Innenseite des Kernteils dauerhaft anhaftet und sich von der Außenseite des Kernteils leicht durch manuelles Abziehen lösen lässt. Auch ein Anätzen der Innenfläche des Kernteils kann dabei den gewünschten Erfolg erzielen.

Durch das leichte Ablösen des Schaumkunststoffmateriales von der Außenseite des Kernteils kann nach der Formgebung der Einlegesohle, also nach dem fußbettgebenden Prozessschritt, die äußere (Rand-) Kontur in den Rohling bzw. den Fräsblock eingebracht werden, wobei diese durch Fräsen, Schneiden, Ausstechen oder Ähnliches erzeugt werden kann. Der nach dem Zuschneiden der Kontur der Einlegesohle an der Außenseite des Kernteils noch anhaftende Schaumkunststoff kann dann ohne weiteres, beispielsweise per Hand, abgezogen werden. Ein weiteres Fräsen oder Schleifen der Unterseite, wie bei den Einlegesohlen gemäß des Standes der Technik, ist nicht mehr notwendig.

Eine Nacharbeitung der Unterseite der Einlegesohle bei der Herstellung der Einlegesohlen gemäß dem oben genannten Stand der Technik ist somit praktisch nicht mehr notwendig, und die aufwändige, und viel Übung erfordernde Handarbeit zum Anpassen der Sohlenunterseiten ist ebenfalls überflüssig und kann mit dem erfindungsgemäßen Herstellverfahren vermieden werden.

Vorzugsweise weist das Kernteil an seiner Unterseite, welche dem Fuß abgewandt ist, Fixiereinrichtungen auf, die das Kernteil bei dem Einlegen in die Ausschäumform in einer vorbestimmten Lage und dabei an einem vorbestimmten Ort halten. Hierbei sollte das Einlegteil derart in die Ausschäumform eingelegt werden, dass die Unterseite des Kernteils im Wesentlichen parallel, mit dem kleinstmöglichen Abstand zum Boden der Ausschäumform zu liegen kommt. Dadurch wird zum Einen ein unnötiger Materialverbrauch an Schaumkunststoff vermieden, aber zum Anderen auch gewährleistet, dass zumindest Teile der Außenseite des Kernteils nach Entfernen des Rohlings aus der Ausschäumform sichtbar bleiben und ein Entfernen von überschüssigen Schaumkunststoff von der Außenseite des Kernteils mit den Fingern erleichtert wird.

Weiter vorzugsweise können dieselben Fixiereinrichtungen, welche in dem Kernteil zum Fixieren beim Anschäumen in der Aufschäumwanne vorgesehen sind, auch beim Einbringen des Fußbettes durch Fräsen, Schleifen oder ähnlichen Materialabtrag verwendet werden. Wodurch aber nicht ausgeschlossen werden soll, dass beide Prozessschritte jeweils eigene Fixiereinrichtungen aufweisen. Die bevorzugte Ausgestaltung derartiger Fixiermittel sind in das Kernteil eingebrachte Durchgangslöcher. Bevorzugt werden je Kernteil 3 Stück angeordnet, in die dann sowohl bei der Fixierung des Kernteils in der Aufschäumwanne, als auch bei der Fixierung des Fräsblocks bzw. Schaumkunststoff-Rohlings bei der Ausarbeitung des Fußbettes, Stützstifte eingreifen. Diese Stützstifte können das Bauteil, bei geeigneter Ausbildung der Stützstifte nicht nur gegen Verschieben fixieren, sondern auch gegen vertikale Bewegungen, wie beispielsweise ein Aufschwimmen in der Ausschäumform.

Für das Erreichen verschiedener Eigenschaften der Einlegesohle kann das Kernteil in vielen Ausführungsvarianten ausgebildet werden, die die verschiedenen Anforderungen, die an eine Einlegesohle gestellt werden können, erfüllen. So kann beispielsweise zur Erhöhung der Dämpfungseigenschaften im Fersenbereich der Einlegesohle das Kernteil mit einer Ausnehmung versehen werden. Damit ist die Schichtdicke an Schaumkunststoff in diesem Bereich lokal erhöht, und es wird eine verbesserte Dämpfung erreicht.

Bei einer vollflächigen Unterlegung der Einlegesohle durch ein Kernteil kann beispielsweise eine Ausnehmung im Bereich der Zehenwurzeln vorgesehen sein, damit die Flexibilität der Sohle insgesamt beim Gehen oder Laufen erhalten bleibt. Eine Unterstützung des Zehenbereichs kann, wie von einem Fachmann leicht ersichtlich, auch durch ein separates Kernteil im Zehenbereich erfolgen.

Weitere Merkmale und Vorteile der Erfindung ergeben sich aus der nachfolgenden Beschreibung der Figuren. Die Figuren zeigen:
- Figur 1:: Eine schematische schuhsohlenseitige Draufsicht der erfindungsgemäßen Einlegesohle;
- Figur 2:: Die Einlegesohle schematisch im Querschnitt längs der Linie A-A der Figur 1;
- Figur 3:: Die Einlegesohle schematisch im Längsschnitt längs der Linie B-B der Figur 1.

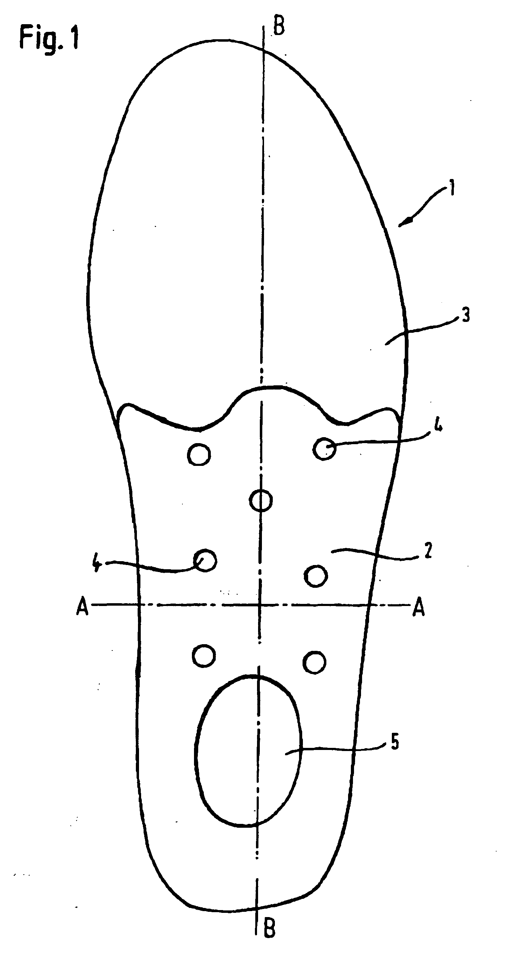

In Figur 1 ist die Schaumkunststoff-Einlegesohle 1 schematisch dargestellt. Sie umfasst ein hartes Kernteil 2, das vom Fersenbereich bis etwa in den Bereich des Mittelfußes reicht und eine stabilisierende Wirkung auf die Einlegesohle 1 ausübt. Das Kernteil 2 ist zumindest an seiner Oberseite, d. h. der fußzugewandten Innenseite mit Schaumkunststoff 3 angeschäumt, der eine ca. 96 %ige Rückstellkraft besitzt.

Das Kernteil 2 ist beispielsweise als Spritzgussteil aus einer Mischung aus Polyethylen (PE), Polypropylen (PP) oder Ethylenvinylacetat (EVA) gefertigt. Jedoch kann das Kernteil 2 aus jedem beliebigen Material gefertigt sein, welches sich nicht mit dem Schaumkunststoff verbindet. Das Kernteil 2 wird beispielsweise von Bohrungen 4 durchsetzt, welche unterschiedliche Durchmesser aufweisen können. Hiermit kann zum einen die Härte und die Elastizität des Kernteils 2 beeinflusst werden, und zum anderen kann mittels der Bohrungen 4 das Kernteil 2 in der Ausschäumform festgelegt werden. Des weiteren können diese Bohrungen dazu dienen, dass der ausgeschäumte Rohling, nachdem er aus der Ausschäumform genommen wurde, über diese Bohrungen 4 beim Fräsen des Fußbettes fixiert wird. Schließlich führt das sich durch die Bohrungen 4 erstreckende Schaumkunststoffmaterial auch zu einer festeren Verbindung zwischen dem Kernteil 2 und der Schaumstoffpoisterung 3.

Das Kernteil 2 weist im Fersenbereich eine ovale Ausnehmung 5 auf, welche in Längsrichtung der Einlegesohle größer ist als in Querrichtung. Damit wird erreicht, dass die Fersenmitte der Einlage ohne Versteifung bleibt und die Einlegesohle an dieser Stelle eine verbesserte Dämpfung aufweist. Die Sohle besteht an dieser Stelle lediglich aus Schaumkunststoff mit einer Dicke von mehreren mm und bildet auf diese Weise eine stoßabsorbierende Fersenmulde.

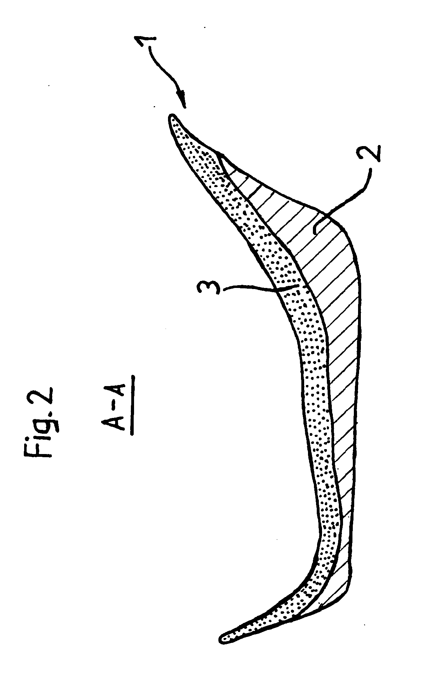

Figur 2 zeigt die Einlegesohle im Querschnitt längs der Linie A-A der Figur 1. Ausgebildet ist ein relativ hoher Schalenrand. Weiterhin ist schematisch die Stützung angedeutet, die für Spreizfüße üblich ist.

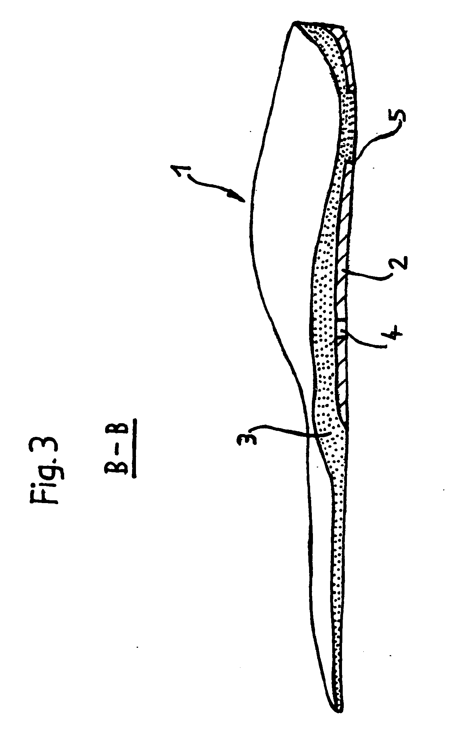

Figur 3 gibt einen Längsschnitt durch die Schaumkunststoff-Einlegesohle längs der Linie B-B von Figur 1 wieder. Hier sieht man die Aussparung 5 im Fersenbereich, die anatomische Längsgewölbeausarbeitung sowie das mit Schaumkunststoff bedeckte Kernteil 2 mit einer Bohrung 4, das die Stützung des Fußes und die Stabilisierung der Einlage bewirkt.

Nach dem erfindungsgemäßen Herstellungsverfahren wird zunächst das Kernteil 2 hergestellt, wobei aus einem breiten Spektrum verfügbarer Härten und Materialen ein geeignetes Material ausgewählt wird. Die Auswahl des Materiales erfolgt je nach gewünschtem Unterstützungseffekt bzw. dem orthopädischen Effekt der Einlegesohle. Das Kernteil wird anschließend in die Ausschäum-Form eingelegt, wobei es durch Stützstifte, die in die entsprechenden Bohrungen 4 des Kernteils 2 eingreifen, in der Ausschäumform fixiert wird. Beispielsweise werden dabei drei Stützstifte von den Bohrungen 4 derart aufgenommen, dass das Kernteil in seiner Lage innerhalb der Ausschäumform fixiert ist. Dabei ist beispielsweise eine verrastbare Verbindung zwischen einer Bohrung 4 und einem Stützstift vorgesehen, so dass das Kernteil 2 beim Ausschäumen der Form nicht aufschwimmen kann bzw. von dem Schaumkunststoff nicht mehr als unvermeidbar unterspült wird. Nach Festsetzung des Kernteils in der Ausschäumform wird diese mit Schaumkunststoff ausgeschäumt, wobei dadurch der Fräsblock bzw. Rohling gebildet wird.

Nach Aushärten des Schaumkunststoffs in der Ausschäumform wird der Rohling aus der Ausschäumform entnommen und dem nächsten Bearbeitungsschritt zugeführt. Dies kann beispielsweise das Einbringen des Fußbetts auf der Oberseite der Einlegesohle sein. Die Einbringung des Fußbettes geschieht vorzugsweise durch Fräsen, beispielsweise mit einer Dreiachsen-Fräsmaschine. Aber auch andere Materialabtragverfahren, wie z. B. Schleifen, können zur Anwendung kommen.

Nach dem Einbringen der Fußbettform wird die Kontur, vorzugsweise in Projektion, im gleichen Bearbeitungsschritt ausgeschnitten. Dabei kann durch Einsatz eines geeigneten Fräsers die Außenkontur gleich zusammen mit dem Fräsen des Fußbettes mit erzeugt werden.

Gemäß dem Stand der Technik mussten die bis dahin hergestellten Einlagesohlen nach dem Fräsen des Fußbettes von der Unterseite, d. h. von der fußabgewandten Seite, durch Schleifen, was meist manuell erfolgt, an den jeweiligen Schuh, in den die Sohlen eingelegt werden sollen, angepasst werden. Nach dem erfindungsgemäßen Herstellverfahren wird der an der Unterseite des Kernteils anhaftende Schaumkunststoff beispielsweise nur noch per Hand von dem Kernteil abgezogen. Eine weitere Bearbeitung der Unterseite der Einlegesohle ist nicht mehr erforderlich, da das Kernteil bereits eine für den Schuh geeignete Außenform aufweist.

Mit dem erfindungsgemäßen Herstellverfahren wird also ein Verfahren bereitgestellt, welches nicht nur den Arbeitsaufwand bei der Herstellung von Einlegesohlen senkt, sondern auch aufgrund der Fertigung des Kernteils als Formteil, vorzugsweise in einem Spritzgussprozess, auch eine konstante hohe Qualität und Formgenauigkeit erreicht.

## Patentansprüche

1. Schaumkunststoff-Einlegesohle (1) für Schuhe umfassend ein Kernteil (2), das als Formteil ausgebildet und zumindest teilweise mit Schaumkunststoff (3) ummantelt ist und das eine dem Fuß zugewandte Innenfläche und eine dem Fuß abgewandte Außenfläche aufweist, **dadurch gekennzeichnet, dass** zumindest Teilbereiche der Innenfläche des Kernteils (2) so ausgebildet sind, dass sie mit dem Schaumkunststoff (3) eine dauerhafte Verbindung eingehen, und die Außenfläche des Kernteils (2) so ausgebildet ist, dass sie mit dem Schaumkunststoff eine leicht entfernbare, nicht dauerhafte Verbindung eingeht.

2. Einlegesohle nach Anspruch 1, bei der das Kernteil durch Spritzgießen hergestellt ist.

3. Einlegesohle nach Anspruch 1 oder 2, bei der sich das Kernteil zumindest über einen Teilbereich der Einlegesohle, insbesondere vom Mittelfußbereich bis zum Fersenbereich, erstreckt.

4. Einlegesohle nach einem der vorangegangenen Ansprüche, bei der das Kernteil Fixiermittel aufweist, mit denen das Kernteil in einer Form festlegbar ist.

5. Einlegesohle nach einem der vorangegangenen Ansprüche, bei der die Außenfläche des Kernteils an eine Schuhinnenform eines Schuhs angepasst ist, in welchen die Einlegesohle eingelegt werden soll.

6. Einlegesohle nach einem der vorangegangenen Ansprüche, bei der das Fußbett der Einlegesohle geschliffen oder gefräst ist.

7. Einlegesohle nach einem der vorangegangenen Ansprüche, bei der das Kernteil mindestens eine Durchgangsöffnung aufweist.

8. Einlegesohle nach einem der vorangegangenen Ansprüche, bei der das Kernteil im Fersenbereich eine Aussparung aufweist.

9. Verfahren zum Herstellen von Schaumkunststoff-Einlegesohlen nach einem der Ansprüche 1 bis 8, mit folgenden Schritten:
a) Vorfertigen eines Kernteils derart, dass es eine einem Schuhinnern zugewandte Innenfläche aufweist, die sich zumindest in Teilbereichen mit dem Schaumkunststoff dauerhaft verbindet, und eine zur Schuhsohle gewandte Außenfläche aufweist, die sich mit dem Schaumkunststoff nicht dauerhaft verbindet,
b) Einlegen des Kernteils in eine Ausschäumform,
c) Fixieren des Kernteils in der Form durch mindestens einen Stützstift,
d) allseitiges Umschäumen des Kernteils mit Schaumkunststoff,
e) Erzeugen eines Fußbettes auf der fußzugewandten Oberseite der Einlegesohle,
f) Erzeugen der Einlegesohlenkontur,
g) Abziehen von Schaumkunststoff von der Unterseite des Kernteils.

10. Verfahren zum Herstellen von Polyurethan-Schaum-Einlegesohlen nach Anspruch 9, bei dem das Fixieren **dadurch** erfolgt, dass das Kernteil Bohrungen enthält, in denen es von Stützstiften aufgenommen wird.

11. Verfahren zum Herstellen von Polyurethan-Schaum-Einlegesohlen nach Anspruch 10, bei dem mindestens einer der Stützstifte so ausgebildet ist, dass er im Kernteil wiederlösbar einrastet.

12. Verfahren zum Herstellen von Polyurethan-Schaum-Einlegesohlen nach einem der Ansprüche 9 bis 11, bei dem das Kernteil so ausgebildet ist, dass es beim Ausschäumen der Form über Durchtrittsöffnungen den Durchtritt der PU-Masse gestattet.

## Claims

1. Foam plastic insole (1) for shoes, comprising a core part (2), which is formed as a moulded part and is at least partially enclosed in foam plastic (3) and which has an inner surface facing the foot and an outer surface facing away from the foot, **characterized in that** at least partial regions of the inner surface of the core part (2) are formed in such a way that they enter into a permanent connection with the foam plastic (3), and the outer surface of the core part (2) is formed in such a way that it enters into an easily detachable, non-permanent connection with the foam plastic.

2. Insole according to Claim 1, wherein the core part is produced by injection moulding.

3. Insole according to Claim 1 or 2, wherein the core part extends at least over a partial region of the insole, in particular from the midfoot region to the heel region.

4. Insole according to one of the preceding claims, wherein the core part has fixing means with which the core part can be fixed in a mould.

5. Insole according to one of the preceding claims, wherein the outer surface of the core part is adapted to an inner form of a shoe into which the insole is to be inserted.

6. Insole according to one of the preceding claims, wherein the foot bed of the insole is ground or milled.

7. Insole according to one of the preceding claims, wherein the core part has at least one passage.

8. Insole according to one of the preceding claims, wherein the core part has a recess in the heel region.

9. Process for producing foam plastic insoles according to one of Claims 1 to 8, with the following steps:
a) prefabricating a core part in such a way that it has an inner surface that is facing a shoe interior and becomes permanently connected to the foam plastic, at least in partial regions, and an outer surface that is facing the shoe sole and becomes non-permanently connected to the foam plastic,
b) inserting the core part into a foaming mould,
c) fixing the core part in the mould by at least one supporting pin,
d) encapsulating the core part in foam plastic on all sides,
e) producing a foot bed on the upper side of the insole, facing the foot,
f) producing the insole contour,
g) pulling off the foam plastic from the underside of the core part.

10. Process for producing polyurethane foam insoles according to Claim 9, wherein the fixing is performed by the core part containing bores in which it is held by supporting pins.

11. Process for producing polyurethane foam insoles according to Claim 10, wherein at least one of the supporting pins is formed in such a way that it engages re-releasably in the core part.

12. Process for producing polyurethane foam insoles according to one of Claims 9 to 11, wherein the core part is formed in such a way that it allows the PU composition to pass through it during the filling of the mould with foam by way of passages.

## Revendications

1. Semelle (1) en matière synthétique destinée à être insérée dans une chaussure et comprenant une partie d'âme (2) configurée comme pièce façonnée, dont au moins une partie est entourée d'une matière synthétique (3) en mousse et dont une surface intérieure est tournée vers le pied et une surface extérieure n'est pas tournée vers le pied,
**caractérisée en ce que**
au moins des parties de la surface intérieure de la partie d'âme (2) sont configurées de manière à assurer une liaison durable avec la matière synthétique (3) en mousse et
**en ce que** la surface extérieure de la partie d'âme (2) est configurée de manière à entrer en liaison non durable et aisée à supprimer avec la matière synthétique en mousse.

2. Semelle à insérer dans une chaussure selon la revendication 1, dans laquelle la partie d'âme est fabriquée par moulage par injection.

3. Semelle à insérer dans une chaussure selon les revendications 1 ou 2, dans laquelle la partie d'âme s'étend au moins sur une partie de la semelle à insérer dans une chaussure et en particulier depuis la partie centrale du pied jusqu'au talon.

4. Semelle à insérer dans une chaussure selon l'une des revendications précédentes, dans laquelle la partie d'âme présente des moyens de fixation qui permettent d'immobiliser la partie d'âme dans un moule.

5. Semelle à insérer dans une chaussure dans laquelle la surface extérieure de la partie d'âme est adaptée à la forme de l'intérieur d'une chaussure dans laquelle la semelle doit être insérée.

6. Semelle à insérer dans une chaussure dans laquelle la surface d'appui du pied de la semelle à insérer dans une chaussure est meulée ou fraisée.

7. Semelle à insérer dans une chaussure dans laquelle la partie d'âme présente au moins une ouverture de passage.

8. Semelle à insérer dans une chaussure dans laquelle la partie d'âme présente une découpe dans la zone du talon.

9. Procédé de fabrication de semelles en matière synthétique moussée et destinées à être insérées dans des chaussures selon l'une des revendications 1 à 8, et présentant les étapes qui consistent à :
a) préfabriquer une partie d'âme de telle sorte qu'elle présente une surface intérieure tournée vers l'intérieur de la chaussure et dont au moins certaines parties se lient de manière durable à la matière synthétique en mousse, et une surface extérieure tournée vers la semelle de la chaussure et qui ne se lie pas durablement à la matière synthétique en mousse,
b) insérer la partie d'âme dans un moule de moussage,
c) fixer la partie d'âme dans le moule par au moins une tige de soutien,
d) englober tous les côtés de la partie d'âme dans une matière synthétique en mousse,
e) former un appui de pied sur le côté supérieur, tourné vers le pied, de la semelle destinée à être insérée dans une chaussure,
f) former le contour de la semelle à insérer dans une chaussure et
g) enlever la matière synthétique en mousse du côté inférieur de la partie d'âme.

10. Procédé de fabrication de semelles en mousse de polyuréthane à insérer dans des chaussures selon la revendication 9, dans lequel la fixation s'effectue par le fait que la partie d'âme présente des alésages dans laquelle elle est reprise par des tiges de soutien.

11. Procédé de fabrication de semelles en mousse de polyuréthane à insérer dans des chaussures selon la revendication 10, dans lequel au moins l'une des tiges de soutien est configurée de manière à s'encliqueter de manière libérable dans la partie d'âme.

12. Procédé de fabrication de semelles en mousse de polyuréthane à insérer dans des chaussures selon l'une des revendications 9 à 11, dans lequel la partie d'âme est configurée de manière à permettre le passage de la masse de PU par des ouvertures de passage lors du moussage du moule.
